**Europäisches Patentamt**

**European Patent Office**

**Office européen des brevets**

(11) Veröffentlichungsnummer: **0 081 670**
**A1**

(12) **EUROPÄISCHE PATENTANMELDUNG**

(21) Anmeldenummer: **82110190.4**

(22) Anmeldetag: **05.11.82**

(51) Int. Cl.³: **F 16 L 59/16,** F 16 L 39/00,
**F 16 L 13/00**

(30) Priorität: **12.12.81 DE 3149371**

(43) Veröffentlichungstag der Anmeldung: **22.06.83**
**Patentblatt 83/25**

(84) Benannte Vertragsstaaten: **AT BE CH FR LI LU NL SE**

(71) Anmelder: **Felten & Guilleaume Energietechnik GmbH,
Schanzenstrasse 24-30 Postfach 80 50 01,
D-5000 Köln 80 (DE)**

(72) Erfinder: **Albrecht, Christhart, Ing. grad.,
Siegfriedstrasse 8, D-5000 Köln 50 (DE)**
Erfinder: **Siegert, Wolfgang, Hagener Strasse 131,
D-5860 Iserlohn 7 (DE)**

(54) **Muffe in einer Durchgangsverbindung von Abschnitten eines Fernwärmeleitungsrohres und Verfahren zu deren Herstellung.**

(57) Die Erfindung betrifft eine Muffe und ein Verfahren zu deren Herstellung in einer Durchgangsverbindung (16) von Abschnitten eines Fernwärmeleitungsrohres (1) mit einem Innenrohr (2) aus Metall, einem hiezu konzentrischen Außenrohr (3) und einer dazwischen angeordneten Schaumstoffisolierung (4). Die Abschnitte des Innenrohres (2) sind durch Schweißung und jene des Außenrohres (3) durch ein auf deren Endbereichen (13) aufsitzendes Muffenrohr (5) miteinander verbunden, wobei der Ringraum (7) innerhalb des Muffenrohres (5) ausgeschäumt ist. Die Muffe wird so ausgestaltet, daß sie zum dichten Verbinden von Abschnitten eines Fernwärmeleitungsrohres (1) mit ringgewelltem Außenrohr (3) geeignet ist, dessen Abdichtung langzeitig mit Sicherheit gewährleistet, Axialkräfte schadlos aufzunehmen vermag und mit geringerem Aufwand als bisher an Rohrleitungen dieser Art zu setzen ist. Hiezu ist vorgesehen, daß das Muffenrohr (5) in Nähe jedes seiner Enden mit wenigstens einer Ringwellung (8) ausgebildet ist, die unter Zwischenlage einer Korrosionsschutz-Dichtmasse (9) in eine Ringwellung (12) des ringgewellten und kunststoffummantelten, metallischen Außenrohres (3) umfänglich eingefügt ist.

Muffe in einer Durchgangsverbindung von Abschnitten eines Fernwärmeleitungsrohres und Verfahren zu deren Herstellung

Die Erfindung betrifft eine Muffe in einer Durchgangsverbindung
von Abschnitten eines Fernwärmeleitunsrohres nach dem Oberbegriff des Anspruchs 1.

Eine aus DE-OS 29 01 301 bekannte Muffe dieser Art enthält innerhalb des Muffenrohres ein sich an der Innenwandung der Außenrohre
abstützendes Rohrstück, welches die äußere Begrenzung der Ausschäumung bildet, wobei der Raum zwischen diesem Rohrstück und
dem Muffenrohr mit einer Dichtungsmasse ausgefüllt ist. Dadurch
soll erreicht werden, daß die Muffe wesentlich leichter fehlerfrei herstellbar ist und auch über einen längeren Zeitraum Dichtigkeit gegen von außen eindringendes Wasser gewährleistet. Es war
nämlich mit den zuvor üblichen Verbindungsmuffen dieser Art, die
insbesondere zum Verbinden relativ kurzer Abschnitte vorisolierter
starrer Rohre eingesetzt wurden, äußerst schwierig, eine langzeitig sichere Abdichtung zwischen dem Muffenrohr und den damit
verbundenen, glatten Außenrohrabschnitten herzustellen.

Die demgegenüber verbesserte Muffe gemäß DE-OS 29 01 301 bringt
zwar die Vorteile mit sich, daß die Funktionen Dichten und Isolieren
von örtlich unterschiedlich angeordneten Elementen übernommen
werden, ohne daß sich diese Funktionen gegenseitig beeinträchtigen,
sowie daß durch die Trennung von Isolierung und Abdichtung die

0081670

hohen Temperaturen, die während des Betriebszustandes im Innenraum herrschen, von der gegen Temperaturen empfindlichen Dichtmasse ferngehalten werden. Sie erfordert jedoch, bedingt durch
das notwendige Einsetzen eines sich an der Innenwandung der Außenrohre abstützenden zusätzlihhen Rohrstückes und durch die Notwendigkeit den so geschaffenen Ringraum mit in diesen einzupressender Dichtmasse auszufüllen, einen erhöhten Montageaufwand. Da hierbei das Innenrohr allein durch den Schäumungsdruck
gegen die Innenfläche der Außenrohrabschnitte gepreßt, und das
äußere Muffenrohr nur übergeschoben, jedoch an seinén Endbereichen in keiner Weise lagebestimmend festgelegt ist, vermag
auch diese bekannte Muffe in der hiermit verbunden Rohrleitung
auftretenden axiale Kräfte, z.B. als Folge von thermischer Dehnung
oder Kontraktion nur in beschränktem Maße aufnehmen, ohne daß die
Dichtungsfunktion verloren geht. Auch ist diese bekannte Muffe
zum Verbinden von flexiblen isolierten Leitungsrohren mit ringgewelltem Außenrohr völlig ungeeignet.

Der Erfindung liegt die Aufgabe zugrunde, eine zum Verbinden von
Abschnitten eines flexiblen Fernwärmeleitungsrohres mit ringgewelltem Außenrohr geeignete Muffe zu schaffen, die dessen Abdichtung langzeitig mit Sicherheit gewährleistet, in der Rohrleitung
auftretende Axialkräfte schadlos aufzunehmen vermag und darüberhinaus mit wesentlich geringerem Aufwand als die bekannte Rohrmuffe zu setzen ist. Die Lösung dieser Aufgabe ist mit der im
Anspruch 1 gekennzeichneten Erfindung umrissen.

Vorteilhafte Weiterbildungen der Erfindung sind mit den Unteransprüchen 2 bis 6 angegeben, von welchen die Ansprüche 2 und
3 auf bevorzugte Ausführungsformen der Erfindung gerichtet sind,
der Anspruch 4 eine vort ilhafte Schweißverbindung des Innenrohres betrifft und die Ansprüche 5 und 6 ein bevorzugtes Verfahren zur Herstellung einer solchen Muffe angeben.

Die Vorteile dieser Muffe liegen vor allem in der Einfachheit ihrer Ausgestaltung, obgleich auch hierbei die Funktionen Isolieren und Dichten, voneinander getrennt, im Dauerbetrieb verläßlich wirksam sind, wobei ohne deren Beeinträchtigung auch über die normalen Verkehrslasten, z.B. bei der Rohrverlegung, auf das Außenrohr ausgeübte Axialkräfte von der Muffe übertragen werden können, zufolge der formschlüssigen Einbindung der beiden endnahen Bereiche des Muffenrohres in Wellungen der miteinander zu verbindenden Außenrohrabschnitte. Da bei diesen im vorgefertigten Zustand die Wellungen unter der Ummantelung mit einer bei Raumtemperatur dauerpalstischem Korrosionsschutz-Dichtmasse gefüllt sind, bedarf es keines zusätzlichen Arbeitsganges, um diese bei der Montage einzubringen sondern es werden lediglich die Enden des in die vorgesehene Lage zurückgeschobenen Muffenrohres mittels eines Spezialwerkzeuges in die betreffenden Wellen der Außenrohrabschnitte umfänglich gleichmäßig eingedrückt (eingewellt), wobei überflüssige Korrosionsschutz-Dichtmasse seitlich verdrängt wird und die angrenzenden Zwischenräume ausfüllt.

Nachstehend ist die Erfindung unter Angabe weiterer Einzelheiten und Vorteile derselben anhand eines in der Zeichnung veranschaulichten Ausführungsbeispieles näher erläutert. In der Zeichnung zeigen:

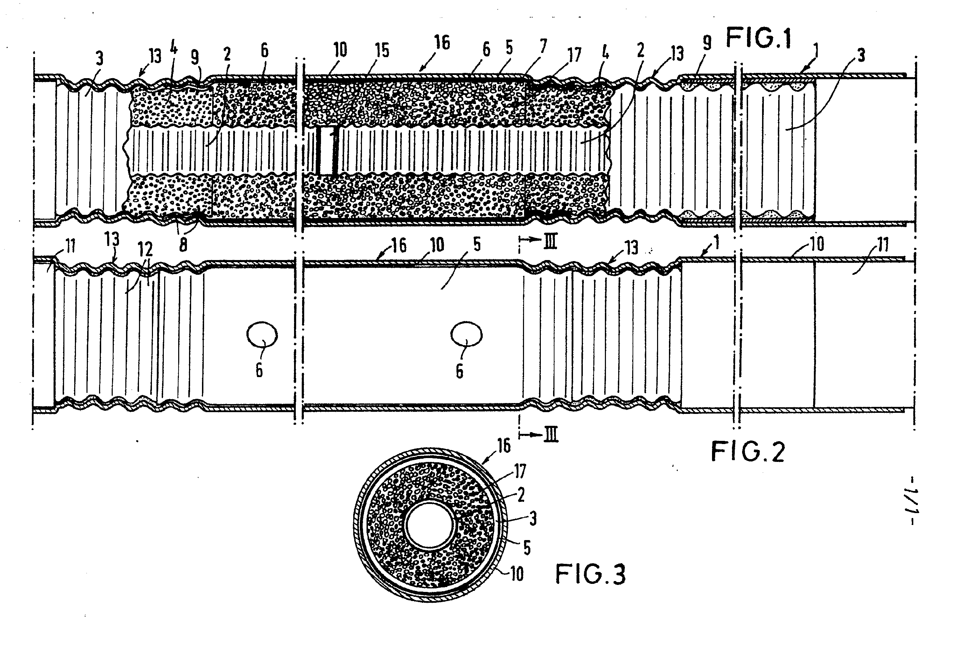

Fig. 1   teilweise im Längsschnitt eine Muffe in einer Durchgangsverbindung von Abschnitten eines Fernwärmeleitungsrohres,

Fig. 2   in Draufsicht die Muffe der Fig. 1 und

Fig. 3   einen Querschnitt nach der Linie III/III der Fig. 2.

Das gezeigte Fernwärmeleitungsrohr 1 weist ein Innenrohr 2 aus Metall und ein hierzu konzentrisch angeordnetes Außenrohr 3 sowie eine deren Zwischenraum ausfüllende Schaumstoffisolierung 4 auf. Im Bereich einer Verbindungsstelle 16 eines solchen Fernwärmeleitungsrohres sind die Abschnitte
des Innenrohres 2 durch Schweißung, und die diesen
gegenüber abgesetzten Abschnittes des Außenrohres 3 durch
ein auf deren Endbereichen 13 aufsitzendes Muffenrohr 5,
welches Schäumungsöffnungen 6 aufweist, miteinander verbunden.
Der Ringraum 7 innerhalb des Muffenrohres 5 ist mit einem
Kunststoff ausgeschäumt, z.B. mit verzelltem Polyäthylen oder
mit einem Polyurethanschaum.

Das Muffenrohr 5 ist in Nähe jedes seiner Enden mit wenigstens
einer Ringwellung 8 ausgebildet, die unter Zwischenlage einer
Korrosionsschutz-Dichtmasse 9 in eine Wellung 12 des ringgewellten und kunststoffummantelten Außenrohres 3 aus Metall
umfänglich eingefügt ist. Dadurch ist eine sichere, langzeitige Abdichtung an den beiden Enden des die Außenrohrabschnitte 3
verbindenden Muffenrohres 5 auf einfache Weise gewährleistet,
unabhängig von der Funktion der vorgefertigten Schaumstoffisolierung 4 sowie des den Ringraum 7 innerhalb des Muffenrohres 5 ausfüllenden Ortschaumes 17. Darüberhinaus ist das
Muffenrohr 5 zufolge des lagebestimmenden Einwellens seiner
Enden dauerhaft so festgelegt, daß es etwa auftretende Längskräfte ebenso gut wie das Außenrohr 3 selbst aufzunehmen und zu
übertragen vermag.

Vorteilhaft ist das Muffenrohr 5 einschließlich der Endbereiche
13 der hiermit verbundenen Abschnitte des Außenrohres 3 von
einem die Schäumungsöffnungen 6 unter Zwischenlage einer Folie
dicht abdeckenden Schrumpfschlauch 10 umschlossen, der sich
beiderends bis über die abgesetzten Enden der aus einem extrudierten Kunststoff, z.B. Polyäthylen, bestehenden Ummantelung
11 erstreckt. Diese ist an einer Seite des Muffenrohres 5
wenigstens um das Maß von dessen Länge vor dem Ende des betreffenden Außenrohrabschnittes 3 abgesetzt, und in diesem Bereich ist ein wieder verwendetes Stück 14 der Ummantelung 11
zwischen der Oberfläche der die Wellung 12 des Außenrohres 3
ausfüllenden Korrosionsschutz-Dichtmasse 9 und dem Schrumpfschlauch 10 angeordnet. Dies erbring den Vorteil eines erhöhten Schutzes der der Verbindungsstelle 16 anliegenden Endbereiche 13 der Außenrohrabschnitte 3 sowie eine gleichmäßige
zylindrische Auflage für den den gesamten Verbindungsbereich 16
umschließenden Schrumpfschlauch 10.

Als besonders vorteilhaft für die Durchführung einer makellosen
Verschweißung hat sich die Anordnung eines Ringes 15 zwischen
den Abschnitten des ringgewellten Innenrohres 2 erwiesen, mit
dem die Enden der anliegenden Innenrohrabschnitte verläßlich,
dicht und dauerhaft verschweißt sind. Dies gilt insbesondere
für Abschnitte eines ringgewellten Innenrohres 2, deren unmittelbare Endverschweißung schwierig durchzuführen ist.

Zur Herstellung einer solchen Muffe werden die zu verbindenden
Abschnitte des Außenrohres 3 einschließlich der Schaumstoffisolierung 4 ein Stück vor dem Ende jedes Innenrohrabschnittes
2 abgesetzt, wobei vor dem Absetzen der Abschnitte des Außenrohres 3 von diesem zu beiden Seiten der Verbindungsstelle 16
je ein Endbereich 13 durch Entfernen eines Stückes der Kunststoffummantelung 11 freigelegt wird. Hiervon wird das Stück 14
der einen Seite zumindest gleich der Länge des Muffenrohres
5 bemessen, das auf dem von der Ummantelung 11 befreiten betreffenden Abschnitt des Außenrohres 3 aufgeschoben und nach
dem Schweißverbinden der Innenrohrabschnitte 2 mittels des
dazwischen eingeschweißten Ringes 15 wieder über die Verbindungsstelle 16 zurückgeschoben wird, bis es gleichermaßen
auf den beiden Außenrohrabschnitten aufsitzt. Danach wird der
Ringraum 7 innerhalb des Muffenrohres 5 mit dem Ortschaum 17
ausgeschäumt. Schließlich wird das Muffenrohr nach dem Zurückschieben desselben über die Verbindungsstelle 16 nahe jedem
seiner Enden passend in wenigstens eine Wellung 12/des Endbereiches
13 jedes der Außenrohrabschnitte 3 umfänglich gleichmäßig eingedrückt, wobei die die Außenrohrwellung 12 füllende Korrosions-
schutz-Dichtmasse 9 teilweise verdrängt wird. Das Ausschäumen des Ringraumes 7 erfolgt mittels eines in diesen teilweise vorgeschäumt oder zusammen mit einem Schäumungszusatz durch die
Schäumungsöffnungen 6 flüssig eingebrachten aufschäumbaren Kunststoffes, z.B. Polyurethan, gegebenenfalls bei mäßiger Wärmezufuhr.

Nach dem Ausschäumen des Ringraumes 7 und Verschließen der
Schäumungsöffnungen 6, z.B. mittels einer Klebefolie, wird
das zuvor entfernte Stück 14 der Ummantelung 11 passend um
den Endbereich 13 des betreffenden Außenrohrabschnittes 3
herumgelegt. Schließlich wird ein zuvor seitwärts über ein
Rohrende geschobener Schrumpfschlauch 10 über die Verbindungsstelle 16 gebracht und auf dieser durch Wärmeeinwirkung festgeschrumpft, wobei er sich mit je einem Ende bis über die belassene Ummantelung 11 jedes der vorgefertigten Fernwärmeaußenrohrabschnitte erstreckt.
Diese Herstellungsweise läßt sich auch von ungeübten bzw. angelernten Monteuren einfach und schnell durchführen, wobei die langzeitige Betriebssicherheit, Dichtheit
und mechanische Festigkeit einer solchen Durchverbindung
dauerhaft gewährleistet sind.

Fl 4649                    1                    11.12.81

Ansprüche:

1. Muffe in einer Durchgangsverbindung von Abschnitten eines
   Fernwärmeleitungsrohres (1) mit einem Innenrohr (2) aus
   Metall, einem hierzu konzentrischen Außenrohr (3) und einer
   dazwischen angeordneten Schaumstoffisolierung (4), wobei
   die Abschnitte des Innenrohres (2) durch Schweißung, und
   die diesen gegenüber abgesetzten Abschnitte des Außenrohres
   (3) durch ein auf deren Endbereichen (13) aufsitzendes Muffenrohr (5), welches Schäumungsöffnungen (6) aufweist, miteinander verbunden sind, und der Ringraum (7) innerhalb des
   Muffenrohres (5) ausgeschäumt ist, d a d u r c h
   g e k e n n z e i c h n e t, daß das Muffenrohr (5) in
   Nähe jedes seiner Enden mit wenigstens einer Ringwellung (8)
   ausgebildet ist, die unter Zwischenlage einer Korrosionsschutz-Dichtmasse (9) in eine Ringwellung (12) des in an
   sich bekannter Weise ringgewellten und kunststoffummantelten Außenrohres (3) aus Metall umfänglich eingefügt ist.

2. Muffe nach Anspruch 1, d a d u r c h   g e k e n n -
   z e i c h n e t, daß das Muffenrohr (5) einschließlich der
   Endbereiche (13) der hiermit verbundenen Abschnitte des
   Außenrohres (3) von einem die Schäumungsöffnungen (6) unter
   Zwischenlage einer Folie dicht abdeckenden Schrumpfschlauch
   (10) umschlossen ist, der sich beiderseits bis über die abgesetzten Enden der aus einem extrudierten Kunststoff, z.B.
   Polyäthylen, bestehenden Ummantelung (11) erstreckt.

3. Muffe nach Anspruch 2, d a d u r c h   g e k e n n -
z e i c h n e t, daß die Ummantelung (11) an einer Seite
des Muffenrohres (5) wenigstens um das Maß von dessen Länge
vor dem Ende des betreffenden Außenrohrabschnittes (3) abgesetzt, und in diesem Bereich ein wiederverwendetes Stück
(14) der Ummantelung (11) zwischen der Oberfläche der die
Wellung des Außenrohres ausfüllenden Korrosionsschutz-Dichtmasse (9) und dem Schrumpfschlauch (10) angeordnet ist.

4. Muffe nach einem der Ansprüche 1 bis 3, d a d u r c h
g e k e n n z e i c h n e t, daß ein Ring (15) zwischen
den Abschnitten des Innenrohres (2), welches ringgewellt
ist, angeordnet und mit den ihm anliegenden Enden dieser
Innenrohrabschnitte verschweißt ist.

5. Verfahren zur Herstellung einer Muffe nach einem der Ansprüche 1 bis 4, bei welchem nach Absetzen der zu verbindenden Abschnitte des Außenrohres (3) mit der Schaumstoffisolierung (4) zunächst ein Muffenrohr (5) auf einen dieser
Abschnitte aufgeschoben, und nach dem Schweißverbinden der
Innenrohrabschnitte (2) über die Verbindungsstelle (16)
zurückgeschoben wird, bis es gleichermaßen auf den beiden
Außenrohrabschnitten aufsitzt, und danach der Ringraum (7)
innerhalb des Muffenrohres (5) mit einem Ortschaum (17) ausgeschäumt wird, d a d u r c h   g e k e n n z e i c h n e t,
daß

a) vor dem Absetzen der Abschnitte des Außenrohres (3) von
diesem zu beiden Seiten der Verbindungsstelle (16) je ein
Endbereich (13) durch Entfernen eines Stückes der Kunststoffummantelung (11) freigelegt wird, von welchen das
Stück (14) der einen Seite zumindest gleich der Länge
des Muffenrohres (5) bemessen wird, und

b) das Muffenrohr (5) nach dem Zurückschieben desselben
über die Verbindungsstelle (16) nahe jedem seiner Enden
passend in wenigstens je eine Wellung des Endbereiches
(13) jedes der Außenrohrabschnitte (3) umfänglich gleichmäßig eingedrückt, wobei die die Außenrohrwellung (8)
füllende Korrosionsschutz-Dichtmasse (9) teilweise verdrängt wird.

6. Verfahren nach Anspruch 5, d a d u r c h   g e k e n n -
   z e i c h n e t ,   daß nach dem Ausschäumen des Ringraumes
   (7) und Verschließen der Schäumungsöffnungen (6), z.B.
   mittels Klebefolie, das zuvor entfernte Stück (14) der Ummantelung (11) passend um den Endbereich (13) des betreffenden Außenrohrabschnittes (3) herumgelegt, und schließlich
   ein zuvor seitwärts über ein Rohrende geschobener Schrumpfschlauch (10) in an sich bekannter Weise durch Wärmeeinwirkung über der Verbindungsstelle (16) festgeschrumpft wird,
   wobei er sich mit je einem Ende bis über die belassene Ummantelung (11) erstreckt.

FIG.1

FIG.2

FIG.3

0081670

Europäisches Patentamt

**EUROPÄISCHER RECHERCHENBERICHT**

Nummer der Anmeldung

| EINSCHLÄGIGE DOKUMENTE | | EP 82110190.4 | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
| A,D | DE - A1 - 2 901 301 (GUTEHOFFNUNGSHÜTTE AG) <br> * Gesamt * <br> -- | 1 | F 16 L 59/16 <br> F 16 L 39/00 <br> F 16 L 13/00 |
| A | EP - A2 - 0 038 051 (G+H MONTAGE GMBH) <br> *. Fig. 1 * <br> -- | 1 | |
| A | DE - A - 2 252 295 (A/SE RASMUSSEN) <br> * Fig. 1 * <br> -- | 1 | |
| A | DD - A - 108 143 (BALLKE) <br> * Gesamt * <br> -- | 1 | RECHERCHIERTE SACHGEBIETE (Int. Cl. ³) |
| A | US - A - 3 801 140 (KELLER) <br> * Fig. 1 * <br> ---- | 1 | F 16 L 9/00 <br> F 16 L 13/00 <br> F 16 L 21/00 <br> F 16 L 33/00 <br> F 16 L 39/00 <br> F 16 L 59/00 |

Der vorliegende Recherchenbericht wurde für alle Patentansprüche erstellt.

| Recherchenort <br> WIEN | Abschlußdatum der Recherche <br> 14-02-1983 | Prüfer <br> SCHUGANICH |
|---|---|---|